Europäisches Patentamt

European Patent Office

Office européen des brevets

(19)

(11) Publication number: **0 260 928**
**A2**

# (12) EUROPEAN PATENT APPLICATION

(21) Application number: **87308137.6**

(22) Date of filing: **15.09.87**

(51) Int. Cl.⁴: **B 60 Q 1/42**

(30) Priority: **18.09.86 GB 8622459**

(43) Date of publication of application:
**23.03.88 Bulletin 88/12**

(84) Designated Contracting States:
**AT BE DE ES FR IT NL SE**

(71) Applicant: **TRW United-Carr Ltd.**
**Buckingham Road**
**Aylesbury Buckinghamshire HP19 3QA (GB)**

(72) Inventor: **Sales, Michael Peter**
**27 Moorhills Crescent**
**Wing Buckinghamshire (GB)**

**Levett, Keith Sydney**
**2 Villiers Close**
**Buckingham Buckinghamshire MK18 1JH (GB)**

(74) Representative: **Abbie, Andrew Kenneth et al**
**R.G.C. Jenkins & Co. 26 Caxton Street**
**London SW1H 0RJ (GB)**

(54) Resetting system for a direction indicator control member in a vehicle.

(57) A resetting system for a direction indicator control member 10 has resetting action which is dependent upon an electrical signal generated as a result of rotation of the vehicle steering column. The electrical signal energises a solenoid 26 having a profiled movable member 47 engageable with a cam face of a cam block 43 associated with the member 10, such that positive movement of the member 47 against the can force on energisations of the solenoid causes the member 10 to be reset or movement of the member 47 away from the cam face allows the member 10 to move to a reset position to which it is biased.

FIG.2

**Description**

RESETTING SYSTEM FOR A DIRECTION INDICATOR CONTROL MEMBER IN A VEHICLE

The present invention relates to a system for resetting a direction indicator control member in a vehicle, and is particularly concerned with resetting the indication control member to an OFF position.

Known devices for this purpose are mechanically linked to the vehicle steering column and are so configured that when the indicator control member is actuated to indicate an impending manoeuvre, rotation of the steering wheel in the direction indicated has no effect but rotation of the steering column in the opposite direction causes mechanical resetting of the indicator control member to the OFF position.

Known mechanical resetting devices have the disadvantages that they must be fitted to the steering column and they are difficult to fit because precise alignment is required. This complicates assembly and increases the assembly costs.

According to the present invention we provide a system for resetting a direction indicator control member in a vehicle characterised in that the resetting action is dependent upon an electrical signal generated as a result of rotation of the vehicle steering column.

An advantage of the present invention is that it obviates the need for a mechanical linkage between the indicator control member and the vehicle steering column. This facilitates assembly in that it enables the indicator control member and resetting system to be assembled off-line and then simply connected to the instrument panel of the vehicle. The indiactor control member can be positioned remote from the steering column if desired and in any case can be positioned to as to be independent of tilting movement of the steering column which is an advantage.

The present invention provides a resetting system which obviates the need for the complex aligning procedures which were previously necessary and enables robotic assembly of the parts which has previously not been a practical possibility.

In an embodiment to be described, the resetting system comprises a member which is movable in response to the electrical signal to reset the indicator control member. Preferably, the resetting action of the movable member is initiated by a solenoid.

The indicator control member may comprise camming means engageable with the movable member. It may be positive movement of the movable member against the camming means which causes the indicator control member to be reset to the OFF position. Alternatively, the indicator control member may be biassed towards a reset position and the camming means and the movable member may be so configured that movement of the movable member away from the camming means allows the indicator control member to return to the OFF position.

In the embodiments to be described, the camming means comprises a generally V-shaped recess. The included angle of the V-shaped recess may be from 120°-160°. Preferably, the included angle is approximately 140°.

Preferably, the resetting system is arranged so that rotation of the vehicle steering column in a given direction causes the elecrical signal to be supplied to cause resetting of the indicator control member whereas rotation of the vehicle steering column in the opposite direction does not cause resetting, said given direction being determined by the position of the indicator control member.

In the embodiment to be described, the resetting system is arranged so that operation of the indicator control member closes electrical contacts, but not so as to complete an electrial circuit for supplying said electrical signal, and so that rotation of the steering column in the opposite direction to that indicated closes electrical contacts so as to complete the electrical circuit in order to cause resetting of the indicator control member.

In the embodiment to be described, the electricxal circuit for supplying said electrical signal comprises a first pair of sets of electrical contacts associated with the indicator control member and a second pair of sets of electrical contacts associated with means for sensing rotation of the vehicle steering column wherein actuation of the indicator control memeber closes one of the first pair of sets of electrical contacts, depending on the direction indicated, and rotation of the steering column in the direction opposite to that indicated closes one of the second pair of sets of electrical contacts to complete the electrical circuit to supply said electrical signal to cause resetting of the indicator control member.

According to a further aspect of the invention we provide a system for resetting a direction indicator control member in a vehicle characterised in that the resetting action is not dependent upon mechanical interaction between the indicator control member and the vehicle steering column.

A particular embodiment of the present invention will now be described, by way of example, with reference to the accompanying drawings in which:-

FIG.1 illustrates the principle of operation of a resetting system according to the present invention and shows one form of means for sensing rotation of a vehicle steering column;

FIG 2 is a perspective view of components of the resetting system;

FIG.3 is a schematic representation of particular components of the resetting system in a first position;

FIG.4 is a schematic representation of the components of Fig.2 in a second position.

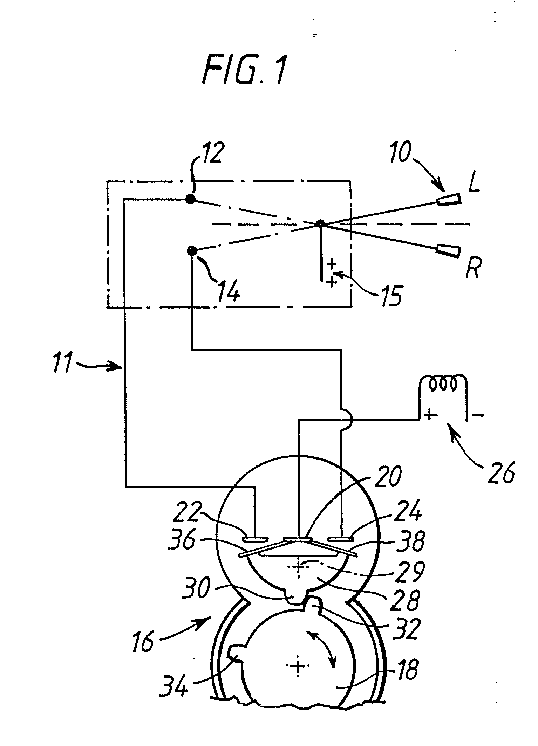

Fig. 1 shows a resetting system for resetting an indicator arm 10 from an indicating position (as shown as L and R in Fig.1) to a central OFF position indicated by a horizontal dotted line. Movement of the indicator arm 10 to the left (L) or right (R) indicating position closes electrical contacts to complete a circuit so as to light indicator bulbs on the vehicle. This is achieved in a conventional manner and independently of the resetting action. Details of this circuitry are therefore not shown.

The resetting system comprises a resetting circuit, indicated generally at 11, comprising switch contacts 12 and 14 which are electrically connected to a rotation detecting mechanism, indicated generally at 16, which is attached to the vehicle steering column 18. The rotation indicating mechanism 16 may conveniently be attached at a lower part of the steering column so as to be remote from any tilting mechanism which may be provided higher up on the steering column nearer the driver. A connection to the vehicle battery is indicated at 15. The mechanism 16 comprises three electrical contacts 20,22 and 24. Contact 20 is a central positive contact and is connected to a solenoid indicated at 26. Contacts 22 and 24 are connected to the switch contacts 12 and 14 respectively.

The mechanism 16 comprises a yoke member 28 supported on a pivot pin indicated at 29formed with a lug 30 configured to be engaged by lugs 32 and 34 formed on the steering column 18 as the steering column is rotated. The lugs 32 and 34 are positioned so as to be symmetrical about the steering column 18 when the vehicle wheels are directed straight ahead. It will be appreciated that the included angle between the lugs 32 and 34 can be chosen to suit requirements. Two electrical contact members, 36 and 38, in leaf spring form are attached to the positive contact 20 so that they rest against the yoke member 28 as shown in Fig. 1. The leaf-spring contacts 36 and 38 together bias the yoke member 28 to a central position as shown in Fig. 1. Of course, any other suitable electrical contact arrangement can be used.

The system is arrange so that when the indicator arm 10 is raised to indicate an impending left turn (position L), an electrical contact member on the indicator arm 10 contacts the switch contact 14. The resetting circuit is not completerd at that stage. Anticlockwise rotation of the steering column to turn the vehicle wheels to the left causes the lug 32 on the steering column 18 to engage the lug 30 on the yoke member 28 so that the left-hand side of the yoke member 28 is lifted to cause the leaf contact 36 to touch the contact member 22 of the switch mechanism 16. At that stage, the resetting circuit is still not completed because the switch contact 12 is open. Further rotation of the steering column causes the lug 32 to rotate past the lug 30 and, in the case of a sharp left turn, the steering column may be rotated enough for the lug 34 also to ride past the lug 30.

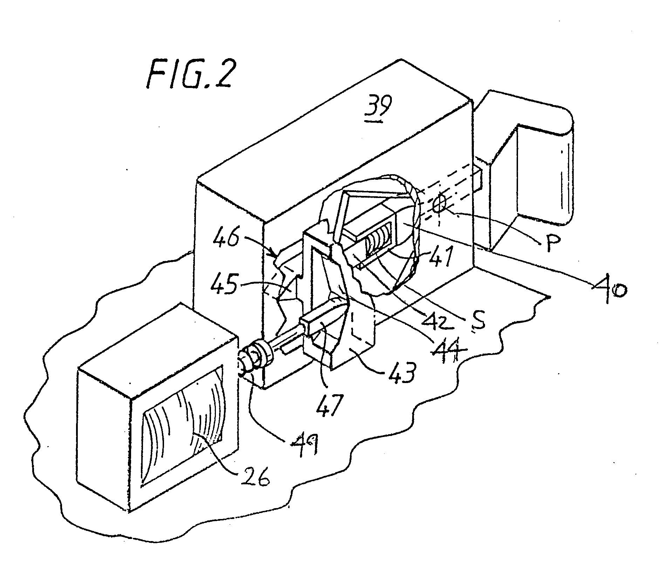

As the user begins to turn the steering column 18 clockwise after the left turn of the vehicle, the lug 32 on the steering column 18 or the lug 34 as appropriate, engages the lug 30 on the yoke member 28 to cause the right-hand side of the yoke member 28 to be lifted so that the leaf contact 38 contacts the electrical contact member 24. This completes an electrical resetting circuit allowing power to be supplied from the vehicle battery to the solenoid 26 to cause resetting of the indicator arm 10 as will be explained later with reference to Figs.2 to 4.

As will be readily understood, likewise when the indicator arm 10 is moved downwardly to indicate an impending right turn of the vehicle, an electrical contact member on the indicator arm 10 contacts the switch contact 12 although that does not cause a circuit to be completed. Clockwise rotation of the steering column 18 causes the lug 34 to engage the lug 30 to cause the leaf contact 38 to contact the switch contact 24 which also does not complete a circuit, and to rotate past the lug 30. If the turn is sufficiently sharp, the lug 32 may also rotate past the lug 30. Anticlockwise rotation of the steering column 18 ie. to straighten the vehicle wheels after a right-hand turn, causes the lug 34 or the lug 32, as appropriate to engage the lug 30 to cause the leaf contact 36 to contact the switch contact 22 of the switch mechanism 16 to complete a circuit to permit current to be supplied to the solenoid 26 to cause resetting of the indicator arm 10 to the OFF position.

Fig 2 shows a housing 39 into which extends a shank 40 which is attached to an L-shaped member forming a base part of an indicator arm. The shank 40 comprises a hollow casing 41 housing a compression spring S. The casing 41 receives a sleeve 42 attached to a cam block 43 so that the cam block 43 is biassed leftwardly in Fig. 2 by the spring S. The cam block is formed with a recess 44. P indicates the pivot support for the shank 40.

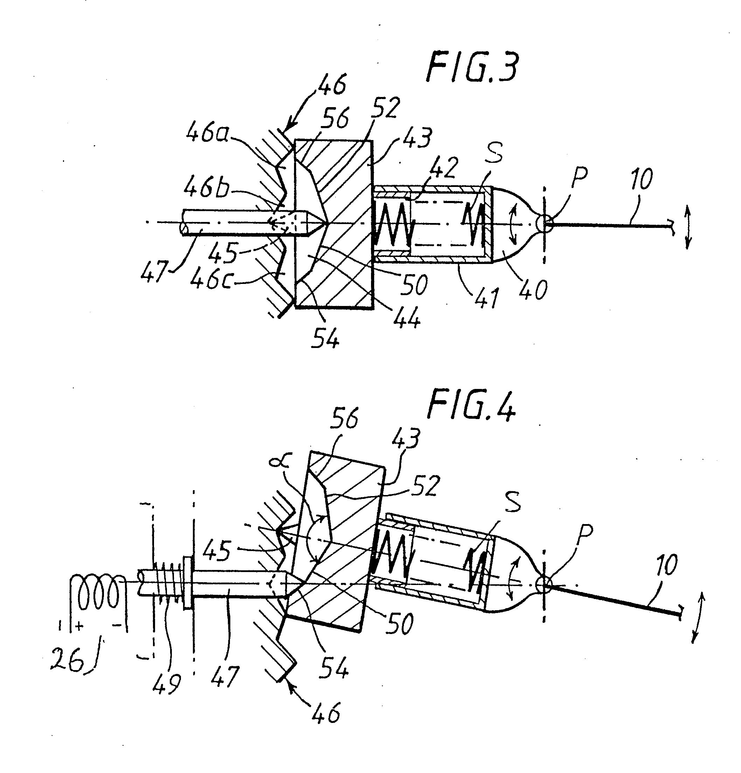

Referring now also to Figs 3 and 4, the position of the indicator arm is indicated schematically and the pivot point P is also shown. Underlying and attached to the cam block 43 is a pointed locator 45 adapted to rachet along a toothed surface 46 formed on a fixed part of the housing 39 of the resetting system of the invention. The toothed surface 46 comprises three recesses 46a 46b and 46c. A pointed pin 47 positioned withi a solenoid coil 48 locates in the recess 44 of the cam block 43. A weak spring 49 biasses the pin 47 against the cam block 43.

The recess 44 in the cam block 43 is generally V-shaped comprising cam faces 50 and 52. The included angle ($\tau$) is approximately 140°. Adjacent the cam faces 50 and 52 are faces 54 and 56 respectively which match the slope on the head of the solenoid pin 47 (as illustrated in Fig. 4).

Fig 3 shows the indicator arm 10 in the OFF position with the locator 45 positioned in the recess 46a of the toothed surface 46 and the head of the solenoid pin 47 positioned at the centre of the V-shaped recess 44 of the cam block 43. In this position the weak spring (not shown) biasses the solenoid pin 47 towards the cam block 43.

As the indicator arm 10 is lowered to indicate an impending right-hand turn of the vehicle this causes the locator 45 to ride over a tooth on the toothed surface 46 thereby depressing the spring S and locates in the recess 46a in the toothed surface 46. As the indicator arm 10 is lowered the pointed head of the solenoid pin 47 slides along the cam face 50 of the recess 44 in the cam block 43 which causes the solenoid pin 47 to be moved leftwardly against the weak spring force mentioned above until the head of the solenoid pin 47 locates against the face 54 on the cam block 43. The location of the locator 45 in the recess 46a forms a natural stop for the downward movement of the arm 10. Other stop means may also be provided.

When the steering column is rotated so as to cause current to be supplied to the solenoid 26 (as explained with reference to Fig.1) the solenoid pin 47 moves rapidly rightwardly and is designed to apply a force of up to 10 Newtons, e.g. approximately 5 Newtons, to the cam block 43. The rightward movement of the solenoid pin 47 causes the cam face 52 of the cam block 43 to ride downwardly over the head of the solenoid pin 47 until the pin 47 locates in the centre of the V-shaped recess 44 in the cam block 43. The force supplied by the solenoid pin 47 is sufficient to cause the locator 45 to ride downwardly on the toothed surface 46 to re-locate in the recess 46b thereof. In this way the indicator arm 10 is reset to the OFF position.

As will be readily understood, likewise when the indicator arm 10 is raised to indicate an impending left-hand turn of the vehicle, the locater 45 locates in the recess 46c of the toothed surface 46 and the solenoid pin 47 rests against the face 56 of the cam block 43 Actuation of the solenoid pin 47 causes the cam face 56 of the cam block to ride upwardly over the head of the solenoid pin 47 and causes the locator 45 to ride upwardly into the recess 46b of the toothed surface 46 so as to reset the indicator arm 10 in its OFF position.

In the embodiment described above the driver can manually override the system by resetting the indicator arm prior to the automatic resetting action in which case the solenoid will not become involved because no circuit involving the solenoid will be completed.

In the embodiment described, power for the solenoid is supplied from the vehicle battery. The voltage involved in 12V for a car and 24V for a truck with a maximum current flow of 2 Amps.

In the embodiment described above, the vehicle battery is directly connectable to the electrical contacts associated with the indicator arm and the solenoid is directly connectable to the electrical contacts associated with the mechanism for detecting rotation of the steering column. It should be understood that this arrangement may be reversed so that the vehicle battery is directly connectable to the electrica contacts associated with the rotation detecting mechanism and the solenoid is directly connectable to the electrical contacts associated with the indicator arm.

Generally, the configuration of the camming surface which co-operates with a solenoid pin determines the effectiveness and efficiency of the resetting operation. It should be understood that this will be configured according to particular requirements in each case.

The degree of rotation of the steering column which is required for enabling automatic resetting of the indicator arm can be selected by positioning the lugs/shoulders on the steering column appropriately. It is envisaged that the steering column switch mechanism will be sna-engageable with a vehicle steering column.

In the described embodiment the indicator arm is shown to the right of the vehicle steering column. It will be understood that it could equally well be to the left of the steering column. Indeed the present invention enables the indicator control means to be positioned quite independently of the position of the vehicle steering column and the indicator control means may be positioned remote from the vehicle steering column.

A different alternative would be to use electronic components for sensing the direction of rotation of a vehicle steering coolumn and for sending signals to a resetting device. For example, a part of the steering column could be provided with circumferentially spaced magnets so that rotation of the steering column could be sensed magnetically. Another alternative would be to provide light reflectors on the steering column and photodetector means for sensing rotation. Suitable electronic interface means would need to be provided to enable the signals obtained in these ways to be utilised to cause automatic resetting.

## Claims

1. A system for resetting a direction indicator control member in a vehicle characterised in that the resetting action is dependent upon an electrical signal generated as a result of rotation of the vehicle steering column.

2. A resetting system according to claim 1 comprising a member which is movable in respone to the electrical signal to reset the indicator control member.

3. A resetting system according to claim 2 wherein the resetting action of the movable member is initiated by a solenoid.

4. A resetting system according to claim 2 or claim 3 comprises camming means associated with the indicator control member, said camming means being engageable with the movable member.

5. A resetting system according to claim 4 wherein the camming means and the movable member are so configured that positive movement of the movable member against the camming means causes the indicator control member to be reset.

6. A resetting system according to claim 4 for use with an indicator control member which is biassed towards a reset position and wherein the camming means and the movable member are so configured that movement of the movable member away from the camming means allows the indicator control member to be reset.

7. A resetting system according to any of claims 2-6 wherein the movable member is a profiled pin.

8. A resetting system according to any of claims 4 to 7 wherein the camming means comprises a generally V-shaped recess against which the movable member cams.

9. A resetting system according to claim 8 wherein the V-shaped recess has an included angle of 120°-160°.

10. A resetting system according to claim 8 or claim 9 wherein the V-shaped recess has an included angle of approximately 140°C.

11. A system according to any preceding claim which is arranged so that rotation of the vehicle steering column in a given direction causes the electrical signal to be supplied to cause resetting of the indicator control member whereas rotation of the vehicle steering column in the opposite direction does not cause resetting, said given direction being determined by the position of the indicator control member.

12. A resetting system according to claim 11 which is arranged so that operation of the indicator control member closes electrical contacts, but not so as to complete the electrical circuit for supplying said electrical signal, and so that rotation of the steering column in the opposite direction to that indicated closes electrical contacts so as to complete the electrical circuit in order to cause resetting of the indicator control member.

13. A resetting system according to claim 12 wherein the electrical circuit for supplying said electrical signal comprises a first pair of sets of electrical contacts associated with the indicator control member and a second pair of sets of electrical contacts associated with means for sensing rotation of the vehicle steering column wherein actuation of the indicator control member closes one of the first pair of sets of electrical contacts, depending on the direction indicated, and rotation of the steering column in the direction opposite to that indicated closes one of the second pair of sets of electrical contacts to complete the electrical circuit to apply said electrical signal to cause resetting of the indicator control member.

14. A resetting system according to any preceding claim comprising means for sensing the direction of rotation of the vehicle steering column.

15. A resetting system according to claim 14 comprising a mechanism positioned adjacent the steering column for sensing the direction of rotation of the steering column.

16. A resetting system according to claim 15 wherein the mechanism comprises two pairs of electrical contacts arranged so that one pair of contacts closes when the steering column is rotated in one direction and so that the other pair of electrical contacts closes when the steering column is rotated in the opposite direction.

17. A resetting system according to claim 16 wherein said mechanism comprises a member moveable as a result of engagment with a formation on the vehicle steering column to close the electrical contacts.

18. A system for resetting a direction indicator control member in a vehicle characterised in that the resetting action is not dependent upon mechanical interaction between the indicator control member and the vehicle steering column.

0260928

## FIG.1

FIG.2

0260928

## FIG.3

## FIG.4